Europäisches Patentamt

European Patent Office

Office européen des brevets

(19)

(11) **EP 1 183 661 B1**

(12) **EUROPEAN PATENT SPECIFICATION**

(45) Date of publication and mention
of the grant of the patent:
**12.03.2003 Bulletin 2003/11**

(21) Application number: **00939244.0**

(22) Date of filing: **02.06.2000**

(51) Int Cl.⁷: **G08B 13/24**, G01V 3/08,
G01V 15/00

(86) International application number:
**PCT/SE00/01150**

(87) International publication number:
**WO 00/075894 (14.12.2000 Gazette 2000/50)**

(54) **A TAG FOR ELECTRONIC ARTICLE IDENTIFICATION, A METHOD FOR ENCODING AN IDENTITY CODE INTO SUCH A TAG, AND AN APPARATUS FOR THE IDENTIFICATION THEREOF**

ETIKETT ZUR ELEKTRONISCHEN ARTIKELIDENTIFIZIERUNG, VERFAHREN ZUR KODIERUNG EINESIDENTITÄTSKODES AUF SOLCHEM ETIKETT UND VORRICHTUNG ZUR IDENTIFIZIERUNG DESSELBEN

ETIQUETTE D'IDENTIFICATION ELECTRONIQUE D'UN ARTICLE, PROCEDE DE CRYPTAGE D'UN CODE D'IDENTITE DANS UNE TELLE ETIQUETTE, ET DISPOSITIF D'IDENTIFICATION CORRESPONDANT

(84) Designated Contracting States:
**DE FR GB**

(30) Priority: **09.06.1999 SE 9902196**

(43) Date of publication of application:
**06.03.2002 Bulletin 2002/10**

(73) Proprietor: **RSO CORPORATION N.V.**
**Curaçao (AN)**

(72) Inventor: **TYREN, Carl**
**MC-98000 Monaco (MC)**

(74) Representative: **Petri, Stellan et al**
**Ström & Gulliksson AB**
**Box 41 88**
**203 13 Malmö (SE)**

(56) References cited:
• **PATENT ABSTRACTS OF JAPAN & JP 04 157 588 A (FUJI ELECTRIC CO LTD ET AL.) 29 May 1992**
• **PATENT ABSTRACTS OF JAPAN & JP 05 172 951 A (FUJI ELECTRIC CO LTD) 13 July 1993**

**Description**

**Technical Field**

The present invention relates to a tag for electronic article identification, comprising at least two magnetic elements representing an identity of the tag, or of an article to which the tag is attached, where the magnetic elements are electromagnetically detectable. The invention also relates to a method of encoding an identity code into such a tag, and to an apparatus for the identification thereof.

**Description of the Prior Art**

Many applications require a reliable and contactless detection of the presence, identity or position of objects within a detection zone. Common examples are for instance price labeling of commercial articles, identification of components in production lines, identification of material type at recycling plants or electronic article surveillance in e. g. shops.

For some applications it is sufficient to detect the presence of the object or article. One example is a simple electronic article surveillance system, which is arranged to provide an alarm signal, once a protected article is carried into a detection zone. Such a simple application uses a tag having one single sensor element in the form of a thin metal strip or wire with magnetic properties. The sensor element may be detected magnetically by means of arc-shaped magnetic generators/detectors, which expose the sensor element to an alternating magnetic field, that affects a physical property of the sensor element. Use is often made of the fact that the alternating magnetic field causes a periodical switch of the magnetic momentum of dipole of the sensor element, which is also known as Barkhausen jumps. Tags of this kind are for instance disclosed in US-A-5 496 611, EP-A-0 710 923 and EP-A-0 716 393.

A different single-element tag technology is described in WO97/29463 and WO97/29464, wherein each tag comprises a wire-shaped element of amorphous or nano-crystalline metal alloy. An important feature of the amorphous or nano-crystalline metal alloy is that the permeability thereof may be controlled by an alternating magnetic modulating field. Through a physical effect known as Giant Magnetoimpedance, the amplitude of an electromagnetic reply signal from the tag is modulated by the magnetic modulating field, when the tag is excited by an electromagnetic interrogation signal. The modulation in amplitude of the reply signal is detected and used for determining the presence of the tag in the detection zone. A similar application is shown in WO98/36393, where very thin amorphous or nano-crystalline wires are used as sensor elements. These wires (also known as microwires) have a diameter of less than 30 $\mu$m, preferably 5-15 $\mu$m.

None of the electronic article surveillance applications described above provides a remotely detectable identity for each tag. However, for advanced applications it is necessary to provide such identity information, representing e. g. an article number, serial number, material code, etc., for the respective object, to which each tag is attached. In a different technical field, such identity information is provided by barcodes (such as EAN), i.e. a printed pattern of black and white lines, which is scanned by an optical reader. Optical barcode tags have an advantage in that they offer a wide codespan - an EAN barcode may for instance represent a 12-digit article number, thereby theoretically providing a codespan of $10^{12}$ different barcode values. Optical article identification systems have a distinct drawback, however, in that the operating distance thereof is quite restricted; the barcode tag will have to pass in close proximity with the optical reader for allowing a successful reading of the barcode. Furthermore, since the barcode is read by optical means, the tag must be attached to a visible surface portion of the article in question.

A non-optical system with longer operating range is disclosed in WO88/01427, wherein the tag or marker is provided with a number of sensor elements in the form of magnetostrictive strips or ribbons made of an amorphous ferromagnetic material and arranged in predetermined angular relationships or at predetermined distances from each other. The identity of such a tag is represented by the predetermined relationships as well as the respective type of individual sensor elements. The sensor elements are excitable to mechanical resonance by magnetic energy. The magnetic signals generated by the resonating sensor elements may be detected magnetically or inductively. Compared to optical barcode systems, the tag of WO88/01427 provides a significantly more limited codespan.

A similar system is described in WO93/14478, wherein the tag or markers are provided with a number of electrical resonant circuits, each of which is inductively coupled to a respective magnetic sensor element. Each electrical resonant circuit is excited to oscillate electrically, and the resonant frequency thereof is controllable, through the permeability of the magnetic element, by an external magnetic field, wherein a simultaneous detection of several identical tags is made possible.

In summary, prior art tags for remote non-optical detection of objects are either of a single-element type, allowing only the presence of each tag to be detected, or of a multi-element type, allowing also an identity of each tag to be detected. Single-element tags are easier to design and produce and therefore have a lower unit cost. On the other hand, multi-element tags require a supporting carrier (particularly for mechanically resonating sensor elements) and/or capacitive and inductive components (for the electric resonant circuit versions). Naturally, this implies a higher cost per unit. Furthermore, the codespan (number of different code values) of the multi-element tags described above is clearly inferior in comparison with optical barcode tags. Additionally, since the multi-element tags mainly operate by magnetic or inductive link, the operating distance of the detection system is quite narrow (although better than for optical barcode systems).

## Summary of the Invention

An objective of the present invention is to provide a tag for electronic article identification, which is capable of providing a large codespan, may be read from a long distance by non-optical means, and may be manufactured at very low cost. More specifically, the invention aims at providing a tag, which combines the good characteristics of optical barcode tags (large codespan) and non-optical multi-element tags (long operating distance) at a very low price per tag.

The invention is also aimed at a method of encoding an identity into such a tag, and an apparatus for identifying the tag.

The objectives have been achieved by the provision of a tag, a method, and an apparatus, which resemble the ones described in aforesaid WO97/29463, WO97/29464, and WO98/36393 (i.e., use electromagnetic excitation and detection, and a magnetic field for modulating the reply signal from the tag), where each tag is provided with at least two thin magnetic wire-shaped elements of an amorphous or nano-crystalline metal alloy for representing an identity of the tag. The sensor elements are available in different predetermined lengths and in different predetermined diameters. A number of individual sensor elements are selected and arranged in a predetermined angular relationship in the tag. The identity of the tag is represented by a code, which is formed by the length and diameter of each individual sensor element, and by the angles between sensor elements.

Other objectives, features and advantages of the present invention appear from the following detailed disclosure, from the drawings as well from the appended patent claims.

## Brief Description of the Drawings

A preferred embodiment of the present invention will now be described with reference to the accompanying drawings, in which:

FIG 1 illustrates an article identification apparatus, in which the tag and method according to the present invention may be applied,
FIG 2 is a schematic planview of a preferred embodiment of a tag according to the invention, where the magnetic elements have different lengths, different diameters and are arranged at respective angles to each other, and
FIGs 3-5 are flow charts illustrating the principle, according to which the apparatus of FIG 1 operates in order to identify the tag of FIG 2.

## Detailed Disclosure of the Invention

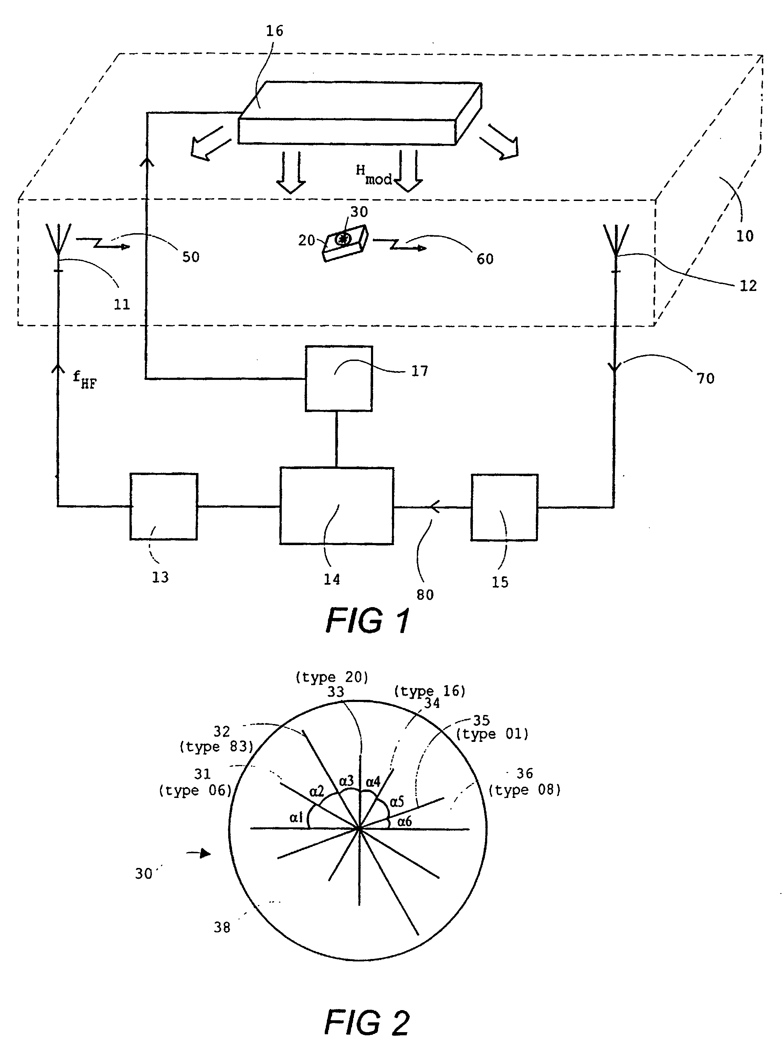

FIG 1 illustrates an article identification apparatus for detecting a tag 30 attached to an object 20, and for determining an identity thereof. A transmitter antenna 11 and a receiver antenna 12 are arranged in a detection zone 10. The transmitter antenna 11 is operatively connected to an output stage 13, which in turn is connected to a controller 14. The output stage comprises various commercially available driving and amplifying circuits and means for generating an alternating electric current of high frequency $f_{HF}$, said current flowing back and forth through the transmitter antenna 11 when supplied thereto, wherein a high-frequency electromagnetic field is generated around the transmitter antenna. This electromagnetic field is used, as will be described in more detail below, for exciting the tag 30 within the detection zone 10, so that the tag will transmit, at the reception of a first electromagnetic signal 50 from the transmitter antenna 11, a second electromagnetic signal 60, which is received by the receiver antenna 12 and transformed into a corresponding electric signal 70.

The receiver antenna 12 is operatively connected to an input stage 15, which comprises conventional means with amplifying and signal processing functions, such as bandpass filtering and amplifying circuits. The input stage 15 also comprises means for demodulating the received signal 70 and supplying it, as a reply signal 80, to the controller 14.

The transmitter antenna 11 as well as the receiver antenna 12 thus have the purpose of converting, in a known way, between an electrical signal of high frequency and an electromagnetic signal. Preferably, the antennas are helically formed antennas with rotating polarization (for optimal coverage in all directions), or alternatively conventional end-fed or center-fed halfwave whip antennas, but other known antenna types are equally possible.

The detection zone 10 is additionally provided with means 16, such as a coil, for generating a magnetic modulating field $H_{mod}$. The means 16 is connected to the controller 14 via a driving stage 17. The driving stage 17 comprises means for generating a modulating current, which is supplied to the means 16, wherein the magnetic modulating field $H_{mod}$ is generated in essential portions of the detection zone 10. The magnetic modulating field $H_{mod}$ may have a frequency of about 500-800 Hz, and the electromagnetic excitation and reply signals may have a frequency within the GHz band, such as 1.3 GHz or 2.45 GHz. Frequencies outside these ranges are however also possible.

As described above, the object 20, which has been schematically illustrated in FIG 1 in the form of a box-shaped package, is provided with the tag 30 according to the invention, comprising at least two magnetic sensor elements 31-36 (FIG 2), which are arranged in a mutual relationship and represent an identity of the tag 30, or of the object 20, to which the tag is attached. The sensor elements are electromagnetically detectable and comprise a magnetic material, the permeability of which is controllable by a magnetic field and the high-frequency impedance of which depends on said permeability, according to an effect commonly known as Gigant Magneto-Impedance. This effect causes a modulation in amplitude of the second electromagnetic signal 60 transmitted from the tag 30 and received by the receiver antenna 12 as the signal 70. The amplitude is modulated by the magnetic modulating field $H_{mod}$.

A system similar to the apparatus described above is thoroughly disclosed in WO97/29463, WO97/29464, and WO98/36393. Document JP 04,157,588 discloses a magnetic tag with magnetic wires of different length.

A preferred embodiment of the tag 30 is illustrated in FIG 2. The tag 30 comprises a tag body 38, such as a thin sheet of paper or plastics, onto which six sensor elements 31-36 are mounted by e.g. adhesion. Alternatively, the six elements 31-36 may be directly integrated into the material of the object 20, as will be described in more detail below.

The material of the sensor elements 31-36 is essentially identical to the ones described in the above-mentioned WO98/36393. In other words, in the embodiment of FIG 2, the sensor elements 31-36 are made from a cobalt-rich amorphous metal alloy, such as $(Fe_{0.06}Co_{0.94})_{72.5}Si_{12.5}B_{15}$. The sensor elements are formed as very thin metal wires with respective lengths between 40 and 100 mm and respective diameters between 10 and 100 $\mu$m. An important feature of the invention is that the individual elements 31-36 have different and predetermined lengths $L_1$-$L_6$ as well as different and predetermined diameters $\phi_1$ - $\phi_6$, which will be described in more detail below.

Optionally, the wires may be provided with a thin coating of glass or another dielectric material, the thickness of which is preferably less than the thickness (diameter) of the metal wire core. Such a wire is commonly referred to as a **microwire** and is produced by rapidly pulling a molten metal alloy and a surrounding molten glass tube.

Alternatively, the material of the sensor elements 31-36 may be nanocrystalline rather than amorphous. Furthermore, the glass coating may be,dispensed with, and the thickness (transversal diameter) of the elements (wires) may be larger than for the preferred embodiment. Transversal diameters of between 100 and 200 $\mu$m have proven useful, particularly about 125 $\mu$m, as shown in WO97/29463 and WO97/29464. However, such wires are not referred to as microwires and are produced in other ways than the one mentioned above, as is well known per se in the technical field of magnetic sensor elements. In summary, the tag of the present invention may comprise magnetic sensor elements of various kinds, as defined by the appended independent tag claim.

According to the embodiment of FIG 2, the six sensor elements 31-36 are arranged at a certain angle $\alpha_1$-$\alpha_6$ to each other. As previously mentioned, the sensor elements 31-36 may be mounted to a carrier 38, such as an adhesive label, or alternatively attached directly to the related object 20, for instance by adhesion. A further alternative is to sew or weave the sensor elements into or onto e.g. an article of clothing or another article of merchandise. In such a case the identity of the sensor may represent an article number, class or type. Yet another alternative is to integrate the sensor elements into a packaging material, such as cardboard, paper or plastic film, or into an article of recycling (e. g. a plastic container, a glass bottle, a cardboard package, etc.). In such cases, the identity of the sensor may represent e.g. a type of material for each recycling article.

The identity of the tag 30 (or, more precisely, its related object 20) is provided by the element lengths, diameters and the angular deviations between the sensor elements 31-36. These parameters jointly form an identity code of the tag, as will be described in more detail below.

From an overall point of view, the basic inventive idea is to create an article identification tag by using a predetermined number of magnetic sensor elements in the form of amorphous microwires. An identity code for the tag is formed by using the following three microwire properties as code parameters:

- length
- diameter
- angle

According to the invention, the magnetic sensor elements are provided in L different lengths and D different diameters. Moreover, A different angular positions are provided on the tag 30. All individual element lengths, element diameters and angular positions are predetermined and well-defined.

From the L different element lengths and D different element diameters, (LxD) unique element types are formed, which are referenced from 0 to (LxD-1). In other words, each element type is given a respective value ranging from 0 to (LxD-1). For each angular position, an element of a specific element type (among said LxD types) is selected and arranged on the tag. Having done this, an identity code is provided, which may be viewed upon as comprising a plurality of words at respective positions in a numeral system. The base of this numeral system is neither decimal nor binary but LxD. The different positions in the code is represented by the different angular positions on the tag. Hence, each angular position represents a respective numerical position in the code, and the type of the respective element represents the value at the respective code position.

The above will be better understood by the following practical example, which refers to FIG 2. FIG 2 illustrates a tag 30, which is capable of storing an identity code having a code span as wide as for a conventional EAN barcode. Such an EAN barcode comprises 12 words, each containing a value between 0 and 9. This provides a code span of $10^{12}$ different codes.

By setting: L=10, D=10, A=6,

$(LxD)^A = 100^6 = 10^{12}$ different code values are obtained for the tag 30 of FIG 2. Therefore, the identity code of tag 30 is compatible with an EAN barcode. As shown in FIG 2, each magnetic sensor element 31-36 is chosen among any of LxD = 100 different types, referenced from 0 to 99. Moreover, the six elements 31-36 are arranged in six different angular positions $\alpha_1$-$\alpha_6$. For the identity code of FIG 2, the following sequence of angular positions is used:

| | |
|---|---|
| $\alpha_1$ | 30° |
| $\alpha_2$ | 30° |
| $\alpha_3$ | 30° |
| $\alpha_4$- | 30° |
| $\alpha_5$- | 40° |
| $\alpha_6$- | 20° |

The EAN code 068320160108 is represented by the tag 30 of FIG 2. The relation between this EAN code and the identity code of tag 30 is as follows:

| EAN base | $10^{11}$ | $10^{10}$ | $10^9$ | $10^8$ | $10^7$ | $10^6$ | $10^5$ | $10^4$ | $10^3$ | $10^2$ | $10^1$ | $10^0$ |
|---|---|---|---|---|---|---|---|---|---|---|---|---|
| EAN word | 0 | 6 | 8 | 3 | 2 | 0 | 1 | 6 | 0 | 1 | 0 | 8 |
| Tag base | $100^5$ | | $100^4$ | | $100^3$ | | $100^2$ | | $100^1$ | | $100^0$ | |
| Tag word | 6 | | 83 | | 20 | | 16 | | 1 | | 8 | |
| Angular pos. | $\alpha_1$ | | $\alpha_2$ | | $\alpha_3$ | | $\alpha_4$ | | $\alpha_5$ | | $\alpha_6$ | |
| Element No. | 31 | | 32 | | 33 | | 34 | | 35 | | 36 | |

A different EAN code will be represented by different element types (values between 0 and 99) for the elements 31-36. Observe, however, that the angular positions $\alpha_1$-$\alpha_6$ will <u>not</u> change but remain identical to the angular sequence specified above. Instead, a different angular sequence for angles $\alpha_1$-$\alpha_6$ may be chosen, in case another *kind* of identity code is to be represented, not another code *value* of the same type of code.

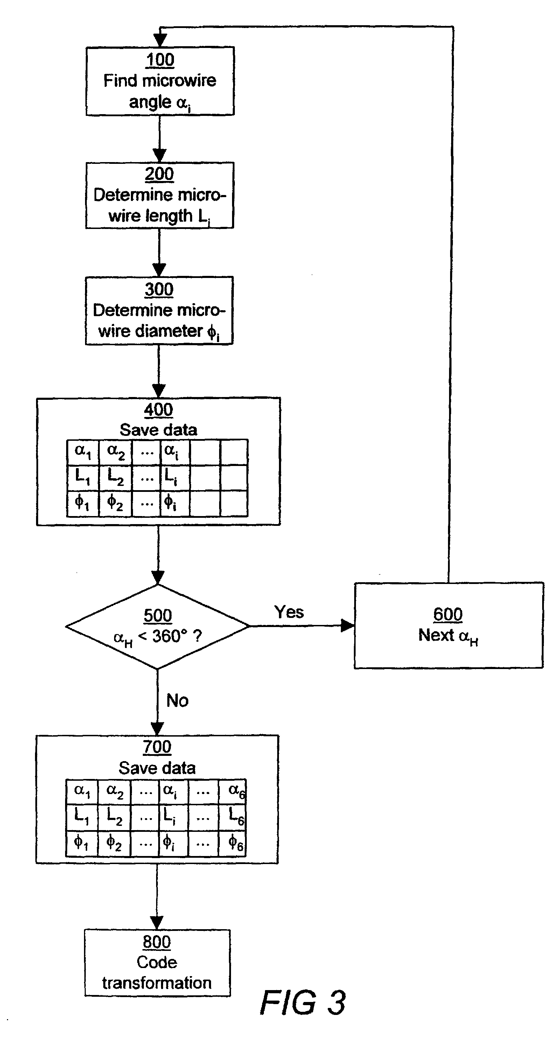

FIGS 3-5 illustrate the way in which the article identification apparatus of FIG 1 operates in order to detect and read the identity code of the tag 30 shown in FIG 2. Firstly, the magnetic modulating field $H_{mod}$, as generated by the coil 16, is varied according to the following function:

$$H_{mod} = [H_0 + H_{ac}\sin(\omega_m t)]\cos(\alpha_H),$$

where:

$H_0$ is the amplitude of a time-invariant (DC) component of the magnetic modulating field $H_{mod}$,
$H_{ac}$ is the amplitude of a time-variant (AC) component of the magnetic modulating field $H_{mod}$,
$\omega_m$ is the angular frequency of the magnetic modulating field $H_{mod}$, and
$\alpha_H$ is an orientation of the magnetic field vector of the magnetic modulating field $H_{mod}$.

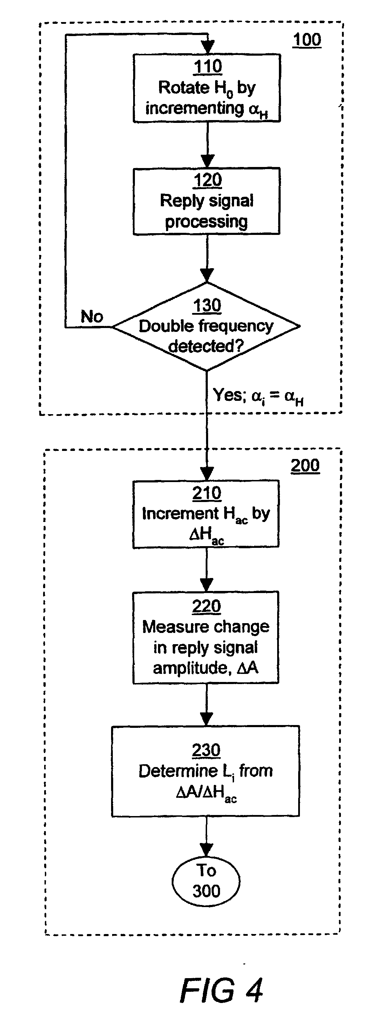

The general procedure performed by the apparatus of FIG 1 is as follows. The magnetic modulating field is given a varying orientation, i.e. the field vector thereof is rotated from 0° to 360° ($\alpha_H$). The purpose of this angular scanning is to sequentially detect the respective angles, at which the magnetic sensor elements are present. It is to be observed that the tag 30 may have an arbitrary and typically unknown orientation within the detection zone 10. Therefore, the absolute angular positions of the magnetic sensor elements 31-36, with respect to the orientation $\alpha_H$ of

the magnetic modulating field $H_{mod}$, is not initially known but have to be determined according to an algorithm, which is shown in more detail in FIG 4.

Referring to FIG 3, the following steps are performed for reading the identity code of tag 30. First, in a step 100, the angle $\alpha_i$ of a first microwire (magnetic sensor element) is determined. In a subsequent step 200, the length $L_i$ of that element is determined, and in a step 300 the diameter $\phi_1$ thereof is determined. Upon termination of step 300, all three relevant parameters $\alpha_i$, $L_i$ and $\phi_1$ (angle, length and diameter) have been determined for element i. These values are saved by the controller 14 in a step 400. In a step 500, it is determined whether the orientation $\alpha_H$ of the magnetic modulating field $H_{mod}$ is less than 360°. If the answer is in the affirmative, the angle $\alpha_H$ is increased in a step 600, and the control is returned to the beginning of step 100, wherein the angle $\alpha_{i+1}$ of a second element i+1 is determined in step 100, the length $L_{i+1}$ thereof is determined in step 200 and the diameter $\phi_{i+1}$ is determined in step 300.

In this way, steps 100, 200, 300, 400, 500 and 600 are repeated for all six elements 31-36, until the angle of rotation $\alpha_H$ of the magnetic modulating field $H_{mod}$ reaches 360°. In a step 700, parameters $\alpha_i$, $L_i$ and $\phi_i$, where i = 1... 6, have been determined for all magnetic sensor elements 31-36. In a last step 800, the determined parameters are transformed into a final identity code of tag 30 by the controller 14. To this end, the controller 14 combines the length and diameter of each individual element and determines the corresponding element type (from 0 to 99) by consulting defined data in e.g. a look-up table stored in memory. Then, since the angular sequence of the angles $\alpha_1$-$\alpha_6$ is well-defined, the controller 14 is capable of mapping the individual element types to the correct angular position $\alpha_1$-$\alpha_6$. Finally, the determined element types are inserted into the respective position (as determined by the angular position), in the identity code, and the final identity code thus determined may be provided as output from the controller to an external device, such as a computer, a cash register, etc.

In FIG 4, the angle determination step 100 is illustrated in more detail. In essence, the details of the angle determination procedure 100 are disclosed in the Swedish patent application 9802221-3, having the title "A sensor, a method and a system for remote detection of objects" and a filing date of 18 June 1998. Said patent application is fully incorporated herein by reference. In summary, the angle determination procedure 100 is based on a distinct frequency shift, which occurs in the reply signal 80, when the magnetic sensor element is momentarily exposed to a time-invariant (DC) component of zero value. Typically, this happens when the magnetic field of the earth balances the momentary orientation of the time-invariant component of $H_{mod}$. At this moment, the frequency of the reply signal 80 shifts to a double value. Hence, as shown in FIG 4, the time-invariant component $H_0$ is rotated by the incrementing of $\alpha_H$ (see step 110). In a step 120, the frequency of the reply signal 80 is monitored by the controller 14. In a step 130, it is determined whether the above characteristic frequency shift to a double frequency is detected in the reply signal 80. If the answer is in the affirmative, then the angular position $\alpha_i$ of element i has been found and is given by the momentary value of $\alpha_H$. Otherwise, the control is returned to the beginning of step 110, and the time-invariant component $H_0$ is further rotated.

Referring now to the lower part of FIG 4, the length determination procedure 200 is illustrated in more detail. As described more thoroughly in the Swedish patent application labelled "A method, a system and a sensor for remote detection of objects, and a method for determining a length of a magnetic element", filed on the same date as the present application and fully incorporated herein by reference, the length of a thin magnetic wire shaped element of an amorphous or nano-crystalline metal alloy, such as microwire, may be determined by the following steps. The amplitude of the magnetic modulating field $H_{mod}$ is varied in a well-defined way, and a corresponding variation in amplitude is detected for the reply signal 80 from the tag 30. The length of individual magnetic sensor elements 31-36 may then be determined through a magnetic property of the element, known as the demagnetizing factor. The demagnetizing factor represents the intrinsic magnetization of the magnetic element in relation to an external magnetic field and depends, inter alia, on the length and the cross-sectional area of the element, as set out below.

Assuming that the magnetic sensor element is a wire having a length c and a diameter a, the longitudinal demagnetizing factor $N_c$ of the element may be expressed as:

$$N_c = \frac{4\pi}{r^2 - 1}\left[\frac{r}{\sqrt{r^2 - 1}}\ln\left[r + \sqrt{r^2 - 1}\right] - 1\right],$$

where $r = c/a$.

The transverse demagnetizing factor $N_a$ may be obtained through the expression:

$$N_c + 2N_a = 4\pi.$$

As previously described, the impedance of the magnetic element will depend on the permeability of the element, and when the permeability is varied by way of the magnetic modulating field, the impedance will vary accordingly, and, ultimately, the amplitude of the electromagnetic reply signal will be modulated by the magnetic modulating field.

The energy of the amplitude modulation will depend not only on the amplitude of the magnetic modulating field but also on the high-frequency (HF) energy of the electromagnetic excitation signal and on the length of the element. The reason why the length will have an influence on the amplitude modulation energy is because the amplitude modulation is due to the permeability, which in turn depends on the demagnetizing factor, which, ultimately, depends on the length of the element, as appears from the formula above.

Consequently, by increasing the amplitude of the magnetic modulating field, the amplitude modulation energy of the reply signal will increase according to an essentially linear factor, which depends on the length of the element. More specifically, a longer magnetic sensor element, such as element 32 in FIG 2, will exhibit a stronger dependence on the variation in amplitude of the magnetic modulating field $H_{mod}$, than a shorter element 33.

Referring back to the length determination procedure 200 of FIG 4, the length $L_i$ of an individual magnetic sensor element 31-36 is determined as follows. The amplitude $H_{ac}$ of the time-variant component of the magnetic modulating field $H_{mod}$ is varied from a first value to a second value in a first step 210, i.e. by increasing the amplitude by a value $\Delta H_{ac}$. In step 220, the amplitude A of the demodulated reply signal 80 is determined for the first and second amplitudes of the magnetic modulating field $H_{mod}$, i.e. the change $\Delta A$ in amplitude of the reply signal is determined in response to the change $\Delta H_{ac}$ in amplitude of the magnetic modulating field $H_{mod}$. Then, a linear relation $K_i$ is calculated as $K_i = \Delta A/\Delta H_{ac}$ in step 230. Since there is a predetermined relationship between the linear relation $K_i$ and the length $L_i$ of the magnetic element, the length may be calculated from the determined relation $K_i = \Delta A/\Delta H_{ac}$. Preferably, the controller 14 is provided with a memory for storing cross-reference data for determining the lengths $L_i$ from the linear relations $K_i$.

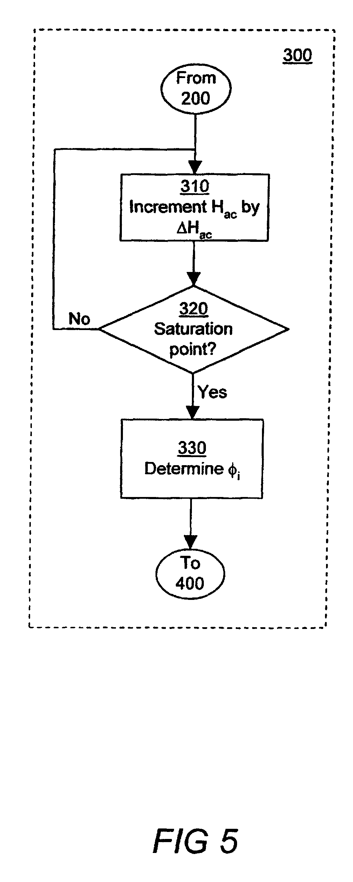

Referring now to FIG 5, the diameter determination procedure 300 is illustrated in more detail. The Swedish patent application 9900119-0, which was filed on 18 January 1999 and is fully incorporated herein by reference, discloses a detection method and device for detecting the diameter of a thin wire-shaped conductor, such as a microwire. The diameter determination procedure 300 operates according to the principles set out in the above patent application and is based on the variation of impedance inside a conductor for high-frequency electric signals. This well-known phenomenon is often referred to as the skin-depth effect and may be summarized according to the following. The penetration depth of electric currents inside the conductor depends on the frequency of the electric signal, of the electrical resistivity of the conductor as well as of the magnetic permeability thereof. The penetration depth or skin depth $\delta$ may be calculated according to the formula:

$$\delta = 1/(\pi f \mu \sigma)^{1/2},$$

where
   $f$ = the frequency of the electric current,
   $\mu = \mu_0 \times \mu_r$ is the permeability of the conductor, and
   $\sigma$ is the conductivity of the conductor material.

When looking at the above formula, it is obvious that the skin depth $\delta$ will decrease, when the denominator of the formula increases. In response, also the value of the impedance of the conductor will decrease. A minimum value of the impedance will be reached, when the skin depth $\delta$ equals the radius of the wire-shaped conductor. After this point, which will be referred to as the "saturation point" below, the impedance will not change, even if the skin depth increases further.

Now, referring back to FIG 5 as well as the apparatus shown in FIG 1, since the magnetic sensor elements 31-36 is made of an amorphous material, their permeability $\mu$ is influenced by the magnetic modulating field $H_{mod}$. Therefore, by incrementing, in a step 310, the amplitude of the time-variant component $H_{ac}$ of the magnetic modulating field $H_{mod}$, the skin depth $\delta$ and, accordingly, the impedance of the magnetic sensor element and, ultimately, the amplitude of the reply signal 80 will vary accordingly. Simultaneously, in step 320, the amplitude of the reply signal 80 will be monitored in search of the saturation point, where the amplitude stops varying in response to the increased $H_{ac}$. When the saturation point has been reached, the diameter $\phi_i$ of the magnetic sensor element i is determined by reading the momentary value of $H_{ac}$, referred to as $H_{ac\_sat}$ below. Initially, for a reference wire having a well-known diameter $\phi_{ref}$, the corresponding value $H_{ac\_ref}$ of the magnetic modulating field has been determined at the saturation point. Now, in step 330, the diameter $\phi_i$ of the magnetic sensor element i is determined as $\phi_i = \phi_{ref} (H_{ac\_sat}/H_{ac\_ref})$

The present invention has been described above by way of a few exemplary embodiments. However, other embodiments than the ones described above are possible within the scope of the invention, as defined by the appended independent patent claims.

**Claims**

1. A tag (30) for electronic article identification, comprising at least two magnetic elements (31-36) representing an identity of the tag, or of an article (20) to which the tag is attached, said magnetic elements being electromagnetically detectable, **characterized in that**

the magnetic elements (31-36) are formed as wires made from an amorphous or nano-crystalline metal alloy;

the magnetic elements (31-36) are arranged at predetermined angles ($\alpha_1$-$\alpha_6$) to each other;

at least one of the magnetic elements (31-36) has a length ($L_1$-$L_6$), which is different from the length of at least one other magnetic element of the tag;

at least one of the magnetic elements (31-36) has a diameter ($\phi_1$-$\phi_6$), which is different from the diameter of at least one other magnetic element of the tag;

wherein the lengths and diameters of the magnetic elements, and the angles between them, jointly form the identity of the tag.

2. A tag according to claim 1, wherein the diameters ($\phi_1$-$\phi_6$) of the magnetic elements (31-36) are selected from a range between 10 and 100 $\mu$m.

3. A tag according to claim 1, wherein the lengths ($L_1$-$L_6$) of the magnetic elements (31-36) are selected from a range between 40 and 100 mm.

4. A tag according to any of claims 1-3, wherein each magnetic element (31-36) is provided with a coating of dielectric material, such as glass.

5. A tag according to any of claims 1-4, wherein the amorphous or nano-crystalline metal alloy of each magnetic element (31-36) exhibits a Giant Magnetoimpedance-effect when exposed to electromagnetic energy (50) of high frequency and magnetic energy ($H_{mod}$) of lower frequency.

6. A tag according to any of claims 1-5, wherein the amorphous or nano-crystalline metal alloy of each magnetic element (31-36) has a majority ratio of cobalt.

7. A tag according to any of claims 1-6, wherein the composition of the amorphous or nano-crystalline metal alloy of each magnetic element (31-36) is $(Fe_{0.06}Co_{0.94})_{72.5}Si_{12.5}B_{15}$.

8. A method of encoding an identity code into an electronic article identification tag (30) having a plurality of magnetic elements (31-36), said identity code comprising a plurality of words at respective positions in a numeral system, each word being capable of storing one of n different values, **characterized by** the steps of

providing a first set of lengths (L) for magnetic elements;

providing a second set of diameters (D) for magnetic elements;

forming a third set of element types by associating one unique length among said first set of lengths (L), and one unique diameter among said second set of diameters (D), with each respective element type,

mapping each of said n different values to a respective element type;

providing a fourth set of angular positions (A) for magnetic elements;

arranging in said tag, for each word in said identity code, a magnetic element of the type corresponding to the value of the word, at one angular position among said fourth set of angular positions.

9. An article identification apparatus, where an individual article (20) is provided with a tag (30) comprising a plurality of angularly arranged magnetic elements (31-36), the apparatus comprising transmitter means (11, 13) for transmitting a first electromagnetic signal (50) in a detection zone (10); receiver means (12, 15) for receiving a second electromagnetic signal (60, 70), generated by the tag in response to the first electromagnetic signal from the transmitter means; modulating means (16) for generating a magnetic field ($H_{mod}$) for modulating the second electromagnetic signal during the generation thereof by the tag; demodulating means (15) for producing a reply signal (80) by demodulating the second electromagnetic signal (70) as received by the receiver means; and a controller (14) operatively connected to the demodulating means; **characterized in that**

the modulating means (16) is arranged to generate a magnetic modulating field ($H_{mod}$) having a rotating orientation, wherein the controller (14) is arranged to detect when a frequency shift occurs for the reply signal (80) and in response determine an angular position ($\alpha_i$) of an individual magnetic element (i);

the modulating means (16) is arranged to generate a magnetic modulating field ($H_{mod}$) with increasing amplitude ($\Delta H_{ac}$), wherein the controller (14) is arranged to determine a corresponding change in amplitude ($\Delta A$) of

the reply signal (80) and in response determine a length ($L_i$) of said individual magnetic element (i);

the modulating means (16) is arranged to generate a magnetic modulating field ($H_{mod}$) with increasing amplitude ($H_{ac}$), wherein the controller (14) is arranged to continuously monitor an amplitude of the reply signal (80) so as to detect a saturation point thereof and in response determine a diameter of said individual magnetic element (i); and

the modulating means (16) and the controller (14) are arranged to repeat the steps above for all magnetic elements (31-36) of the tag (30), wherein the controller (14) is arranged to determine an identity of the tag (30) from the angular positions ($\alpha_i$), lengths ($L_i$) and diameters ($\phi_i$) of the magnetic elements (31-36).

**Patentansprüche**

1. Etikett (30) zur elektronischen Artikelidentifizierung, umfassend mindestens zwei magnetische Elemente (31-36), die die Identität des Etiketts oder eines Artikels (20) repräsentieren, an dem das Etikett angebracht ist, wobei besagte magnetische Elemente elektromagnetisch detektierbar sind, **dadurch gekennzeichnet, daß**
die magnetischen Elemente (31-36) als Drähte ausgebildet sind, die aus einer amorphen oder nano-kristallinen Metallegierung hergestellt sind;
die magnetischen Elemente (31-36) unter vorab festgelegten Winkeln ($\alpha_1$-$\alpha_6$) zueinander angeordnet sind;
mindestens eines der magnetischen Elemente (31-36) eine Länge ($L_1$-$L_6$) aufweist, die sich von der Länge mindestens eines weiteren magnetischen Elements des Etiketts unterscheidet;
mindestens eines der magnetischen Elemente (31-36) einen Durchmesser ($\Phi_1$-$\Phi_6$) aufweist, der vom Durchmesser mindestens eines weiteren magnetischen Elements des Etiketts verschieden ist;
wobei die Längen und Durchmesser der magnetischen Elemente und die Winkel zwischen diesen gemeinsam die Identität des Etiketts bilden.

2. Etikett nach Anspruch 1, worin die Durchmesser ($\Phi_1$-$\Phi_6$) der magnetischen Elemente (31-36) aus einem Bereich zwischen 10 und 100 µm ausgewählt sind.

3. Etikett nach Anspruch 1, worin die Längen ($L_1$-$L_6$) der magnetischen Elemente (31-36) aus einem Bereich zwischen 40 und 100 mm ausgewählt sind.

4. Etikett nach irgendeinem der Ansprüche 1-3, worin jedes magnetische Element (31-36) mit einer Beschichtung aus dielektrischem Material, wie z.B. Glas, versehen ist.

5. Etikett nach irgendeinem der Ansprüche 1-4, worin die amorphe oder nano-kristalline Metallegierung jedes magnetischen Elements (31-36) einen Riesen-Magnetowiderstandseffekt aufweist, wenn sie elektromagnetischer Energie (50) mit Hochfrequenz und magnetischer Energie ($H_{mod}$) mit Niederfrequenz ausgesetzt ist.

6. Etikett nach irgendeinem der Ansprüche 1-5, worin die amorphe oder nano-kristalline Metallegierung jedes magnetischen Elements (31-36) ein Mehrheitsverhältnis von Kobalt aufweist.

7. Etikett nach irgendeinem der Ansprüche 1-6, worin die Zusammensetzung der amorphen oder nano-kristallinen Metallegierung jedes magnetischen Elements (31-36) $(FE_{0,06}CO_{0,94})_{72,5}Si_{12,5}B_{15}$ ist.

8. Verfahren zur Kodierung eines Identitätscodes auf einem Etikett (30) zur elektronischen Artikelidentifizierung mit mehreren magnetischen Elementen (31-36), wobei besagter Identifizierungscode mehrere Worte an jeweiligen Positionen in einem Zahlensystem umfaßt, wobei jedes Wort zur Speicherung eines von n unterschiedlichen Werten fähig ist, **gekennzeichnet durch** die Schritte:

Bereitstellen einer ersten Gruppe von Längen (L) für magnetische Elemente;

Bereitstellen einer zweiten Gruppe von Durchmessern (D) für magnetische Elemente;

Bilden einer dritten Gruppe von Elementtypen **durch** Zuordnen einer eindeutigen Länge aus besagter erster Gruppe von Längen (L) und eines eindeutigen Durchmessers aus besagter zweiten Gruppe von Durchmessern (D) zu jedem jeweiligen Elementtyp,

Abbilden jedes besagter n unterschiedlicher Werte auf einen jeweiligen Elementtyp,

Bereitstellen einer vierten Gruppe von Winkelpositionen (A) für magnetische Elemente;

Anordnen in jedem Etikett, für jedes Wort in besagtem Identitätscode, eines magnetischen Elements von dem Wert des Wortes entsprechenden Typ an einer Winkelposition aus besagter vierter Gruppe von Winkelpositionen.

9. Artikelidentifikationsvorrichtung, wo ein individueller Artikel (20) mit einem Etikett (30) versehen ist, das mehrere winkelig angeordnete magnetische Elemente (31-36) aufweist, wobei die Vorrichtung ein Sendemittel (11, 13) zum Senden eines ersten elektromagnetischen Signals (50) in einer Detektionszone (10); ein Empfangsmittel (12, 15) zum Empfangen eines zweiten elektromagnetischen Signals (60, 70), das von dem Etikett als Antwort auf das erste elektromagnetische Signal von dem Sendemittel erzeugt wird; ein Moduliermittel (16) zum Erzeugen eines magnetischen Feldes ($H_{mod}$) zum Modulieren des zweiten elektromagnetischen Signals während der Erzeugung desselben durch das Etikett; ein Demoduliermittel (14) zum Erzeugen eines Antwortsignals (80) durch Demodulieren des zweiten elektromagnetischen Signals (70) bei Empfang von dem Empfangsmittel; und einen Controller (14) umfaßt, der mit dem Demoduliermittel operativ verbunden ist; **dadurch gekennzeichnet, daß**
das Moduliermittel (16) derart gestaltet ist, daß es ein magnetisches Modulierfeld ($H_{mod}$) mit einer rotierenden Orientierung erzeugt, wobei der Controller (14) derart gestaltet ist, daß er detektiert, wenn eine Frequenzverschiebung für das Antwortsignal (80) auftritt, und als Antwort eine Winkelposition ($\alpha_i$) eines individuellen magnetischen Elements (i) bestimmt;
das Moduliermittel (16) derart gestaltet ist, daß es ein magnetisches Modulierfeld ($H_{mod}$) mit zunehmender Amplitude ($\Delta H_{ac}$) erzeugt, wobei der Controller (14) derart gestaltet ist, daß er eine entsprechende Amplitudenänderung ($\Delta A$) des Antwortsignals (80) bestimmt und als Antwort eine Länge ($L_i$) besagten individuellen magnetischen Elements (i) bestimmt;
das Moduliermittel (16) derart gestaltet ist, daß es ein magnetisches Modulierfeld ($H_{mod}$) mit zunehmender Amplitude ($H_{ac}$) erzeugt, wobei der Controller (14) derart gestaltet ist, daß er kontinuierlich die Amplitude des Antwortsignals (80) überwacht, um einen Sättigungspunkt derselben zu detektieren und als Antwort einen Durchmesser besagten individuellen magnetischen Elements (i) zu bestimmen; und
das Moduliermittel (16) und der Controller (14) derart gestaltet sind, daß sie die obigen Schritte für alle magnetischen Elemente (31-36) des Etiketts (30) wiederholen, wobei der Controller (14) derart gestaltet ist, daß er die Identität des Etiketts (30) anhand der Winkelpositionen ($\alpha_i$), Längen ($L_i$) und Durchmesser ($\phi_i$) der magnetischen Elemente (31-36) bestimmt.

**Revendications**

1. Etiquette (30) d'identification électronique d'un article, comprenant au moins deux éléments magnétiques (31 à 36) représentant l'identité de l'étiquette, ou d'un article (20) auquel est associé l'étiquette, lesdits éléments magnétiques étant détectables électromagnétiquement, **caractérisé en ce que** :

les éléments magnétiques (31 et 36) sont formés comme des fils composés d'un alliage métallique amorphe ou nanocristallin ;

les éléments magnétiques (31 à 36) sont placés selon des angles prédéterminés ($\alpha 1$ à $\alpha 6$) les uns par rapport aux autres ;

au moins l'un des éléments magnétiques (31 à 36) possède une longueur ($L_1$ à $L_6$) différente de la longueur d'au moins un autre élément magnétique de l'étiquette ;

au moins l'un des éléments magnétiques (31 à 36) possède un diamètre ($\phi_1$ à $\phi_6$) différent du diamètre d'au moins un autre élément magnétique

de l'étiquette ;

dans laquelle les longueurs et les diamètres des éléments magnétiques, et les angles formés entre eux, forment communément l'identité de l'étiquette.

2. Etiquette selon la revendication 1, dans laquelle les diamètres ($\phi_1$ à $\phi_6$) des éléments magnétiques (31 à 36) sont sélectionnés dans une plage comprise entre 10 et 100 $\mu$m.

**3.** Etiquette selon la revendication 1, dans laquelle les longueurs ($L_1$ à $L_6$) des éléments magnétiques sont sélectionnées dans une plage comprise entre 40 et 100 mm.

**4.** Etiquette selon l'une des revendications 1 à 3, dans laquelle chaque élément magnétique (31 à 36) est recouvert d'une couche de protection de matériau diélectrique, tel que le verre.

**5.** Etiquette selon l'une des revendications 1 à 4, dans laquelle l'alliage métallique amorphe ou nanocristallin de chaque élément magnétique (31 à 36) démontre un effet de magnétoimpédance très important lorsqu'il est exposé à de l'énergie électromagnétique (50) de haute fréquence et à de l'énergie magnétique ($H_{mod}$) de fréquence plus basse.

**6.** Etiquette selon l'une des revendications 1 à 5, dans laquelle l'alliage métallique amorphe ou nanocristallin de chaque élément magnétique (31 à 36) possède une proportion majoritaire de cobalt.

**7.** Etiquette selon l'une des revendications 1 à 6, dans laquelle la composition de l'alliage métallique amorphe ou nanocristallin de chaque élément magnétique (31 à 36) est $(Fe_{0.86}Co_{0.94})_{72.5}Si_{12.5}B_{15}$.

**8.** Procédé permettant de coder un code d'identité dans une étiquette d'identification électronique d'article (30) possédant une pluralité d'éléments magnétiques (31 à 36), ledit code d'identité comprenant une pluralité de mots à des emplacements respectifs d'un système de numération, chaque mot pouvant stocker l'une des n valeurs différentes, **caractérisé par** les étapes consistant à :

fournir une première série de longueurs (L) pour les éléments magnétiques ;

fournir une seconde série de diamètres (D) pour les éléments magnétiques ;

former une troisième série de types d'élément en associant une seule longueur parmi ladite première série de longueurs (L) et un seul diamètre parmi ladite seconde série de diamètres (D), pour chaque type d'élément respectif ;

mapper chacune des dites n valeurs différentes vers un type d'élément respectif ;

fournir une quatrième série de positions angulaires (A) pour les éléments magnétiques ;

placer dans ladite étiquette, pour chaque mot du dit code d'identité, un élément magnétique du type correspondant à la valeur du mot, à une position angulaire choisie parmi ladite quatrième série de positions angulaires.

**9.** Appareil d'identification d'article, dans lequel un article individuel (20) est fourni avec une étiquette (30) comprenant une pluralité d'éléments magnétiques (31 à 36) placés selon des angles déterminés, l'appareil comprenant un dispositif de transmission (11, 13) pour transmettre un premier signal électromagnétique (50) dans une zone de détection (10); un dispositif de réception (12, 15) pour recevoir un second signal électromagnétique (60, 70) généré par l'étiquette en réponse au premier signal électromagnétique provenant du dispositif de transmission ; un dispositif de modulation (16) pour générer un champ magnétique ($H_{mod}$) afin de moduler le second signal électromagnétique lors de sa création par l'étiquette ; un dispositif de démodulation (15) pour produire un signal de réponse (80) en démodulant le second signal électromagnétique (70) tel que reçu par le dispositif de réception ; et un contrôleur (14) connecté au dispositif de démodulation ; **caractérisé en ce que** :

le dispositif de modulation (16) est adapté pour générer un champ de modulation magnétique ($H_{mod}$) possédant une orientation réglable, dans lequel le contrôleur (14) est adapté pour détecter lorsqu'un écart de fréquences survient pour le signal de réponse (80) et pour déterminer en réponse la position angulaire ($\alpha_i$) d'un élément magnétique individuel (i) ;

le dispositif de modulation (16) est adapté pour générer un champ de modulation magnétique ($H_{mod}$) avec une amplitude croissante ($\Delta H_{ac}$), dans lequel le contrôleur (14) est adapté pour déterminer une modification correspondante de l'amplitude ($\Delta A$) du signal de réponse (80) et pour déterminer en réponse une longueur ($L_i$) du dit élément magnétique individuel (i) ;

le dispositif de modulation (16) est adapté pour générer un champ de modulation magnétique ($H_{mod}$) avec une amplitude croissante ($H_{ac}$), dans lequel le contrôleur (14) est adapté pour surveiller de manière continue l'amplitude du signal de réponse (80) de façon à détecter un point de saturation de celui-ci et pour déterminer en réponse un diamètre du dit élément magnétique individuel (i) ; et

le dispositif de modulation (16) et le contrôleur (14) sont adaptés pour répéter les étapes ci-dessus pour tous les éléments magnétiques (31 à 36) de l'étiquette (30), dans lequel le contrôleur (14) est adapté pour déterminer une identité de l'étiquette (30) à partir des positions angulaires ($a_i$), des longueurs ($L_i$) et des diamètres ($\phi_i$) des éléments magnétiques (31 à 36).

16

H_mod

30
20

50
60

11

$f_{HF}$

17

70

13

14

15

80

**FIG 1**

(type 20)
33
(type 16)
34
32
(type 83)
35
(type 01)
31
(type 06)

α2  α3 α4
α1        α5
α6

36
(type 08)

30

38

**FIG 2**

**100**
Find microwire
angle $\alpha_i$

**200**
Determine micro-
wire length $L_i$

**300**
Determine micro-
wire diameter $\phi_i$

**400**
Save data

| $\alpha_1$ | $\alpha_2$ | ... | $\alpha_i$ | | |
|------------|------------|-----|------------|---|---|
| $L_1$ | $L_2$ | ... | $L_i$ | | |
| $\phi_1$ | $\phi_2$ | ... | $\phi_i$ | | |

**500**
$\alpha_H < 360°$ ?

Yes

**600**
Next $\alpha_H$

No

**700**
Save data

| $\alpha_1$ | $\alpha_2$ | ... | $\alpha_i$ | ... | $\alpha_6$ |
|------------|------------|-----|------------|-----|------------|
| $L_1$ | $L_2$ | ... | $L_i$ | ... | $L_6$ |
| $\phi_1$ | $\phi_2$ | ... | $\phi_i$ | ... | $\phi_6$ |

**800**
Code
transformation

*FIG 3*

14

<u>100</u>

<u>110</u>
Rotate $H_0$ by
incrementing $\alpha_H$

<u>120</u>
Reply signal
processing

<u>130</u>
Double frequency
detected?

No

Yes; $\alpha_i = \alpha_H$

<u>200</u>

<u>210</u>
Increment $H_{ac}$ by
$\Delta H_{ac}$

<u>220</u>
Measure change
in reply signal
amplitude, $\Delta A$

<u>230</u>
Determine $L_i$ from
$\Delta A / \Delta H_{ac}$

To
300

*FIG 4*

_300_

From
200

_310_
Increment $H_{ac}$ by
$\Delta H_{ac}$

_320_
Saturation
point?

No

Yes

_330_
Determine $\phi_i$

To
400

# FIG 5